# EUROPÄISCHE PATENTSCHRIFT

(11) **EP 1 576 027 B1**
(45) Veröffentlichungstag und Bekanntmachung des Hinweises auf die Patenterteilung: **13.06.2007**
(21) Anmeldenummer: 03785828.9
(22) Anmeldetag: 16.12.2003
(51) Int. Cl.: C08G 18/67, C08G 18/81, C09D 175/16

(54) **VERFAHREN ZUR HERSTELLUNG VON STRAHLUNGSHÄRTBAREN URETHAN(METH)ACRYLATEN**
METHOD FOR THE PRODUCTION OF RADIATION-CURABLE URETHANE (METH)ACRYLATES
PROCEDES POUR PRODUIRE DES URETHANNE (METH)ACRYLATES POUVANT DURCIR PAR RAYONNEMENT

(30) Priorität: 18.12.2002 DE 10259673
(43) Veröffentlichungstag der Anmeldung: 21.09.2005
(73) Patentinhaber: BASF Aktiengesellschaft, 67056 Ludwigshafen (DE)
(72) Erfinder: HEISCHKEL, Yvonne, 68199 Mannheim (DE); PAULUS, Wolfgang, 55270 Ober-Olm (DE); SCHWALM, Reinhold, 67157 Wachenheim (DE); ENENKEL, Peter, 67258 Hessheim (DE)
(86) Internationale Anmeldenummer: PCT/EP2003/014286
(87) Internationale Veröffentlichungsnummer: WO 2004/055090

(56) Entgegenhaltungen:
- EP-A- 0 686 621
- EP-A- 0 928 800
- EP-A- 1 043 351
- US-A- 4 380 604

## Beschreibung

Die Erfindung betrifft ein Verfahren zur Herstellung von zähelastischen strahlungshärtbaren Urethan(meth)acrylaten, diese Urethan(meth)acrylate und deren Verwendung.

Strahlungshärtbare Verbindungen finden zunehmend Verwendung als Beschichtungssysteme verschiedener Substrate.

Aus der EP-A-54 105, DE-A 33 16 593, EP-A-279 303 und EP-A1 921 168 sind Verfahren bekannt, bei denen in einer 1. Stufe ein (Meth)acrylsäureester aus (Meth)acrylsäure und Hydroxyverbindungen hergestellt wird und in einer zweiten Stufe überschüssige (Meth)acrylsäure mit Epoxiden umgesetzt wird.

DE-OS 1 644 798, DE-A1 27 37 406, EP-A1 53 749, DE-A1 195 25 489, EP-A1 942 022, EP-A1 928 800, EP-A2 1 085 065 und EP-A1 1 138 710 beschreiben die Umsetzung von Isocyanaten mit Hydroxyalkylacrylaten und weiteren hydroxygruppenhaltigen Verbindungen.

Nachteilig an den in der EP-A1 928 800 beschriebenen Mehrschichtensystemen ist, daß es sich dabei um zweikomponentige Systeme handelt, bei denen eine isocyanathaltige und eine hydroxygruppenhaltige Komponente vom Anwender erst kurz vor der Lackherstellung miteinander vermischt werden. Durch Fehldosierungen können somit leicht die Lackeigenschaften verschlechtert werden.

DE-OS 21 15 373 beschreibt die Herstellung lichtempfindlicher Zusammensetzungen für Druckplatten enthaltend Polyurethan-Vorpolymerisate, deren Hydroxykomponente mindestens 5 Etherbindungen enthält. Die Anforderungen an Systemen für Druckplatten sind jedoch gänzlich andere als an Beschichtungssysteme.

US4380604 beschreibt die Herstellung von strahlungshärtbaren Urethan(meth)acrylaten aus einem Polyioscyanat, einem Hydroxyalkyl-(meth)acrylat und einem Veresterungsprodukt von einer (Meth)acrylsäure und einem alkoxylierten Polyol.

Aus EP0686621 ist ein Verfahren bekannt wobei die Säurezahl von Veresterungsprodukten von (Meth)acrylsäuren und alkoxylierten Polyolen reduziert werden durch eine Behandlung mit mindestens zwei Epoxidgruppen enthaltende Verbindungen.

Nachteilig an den in den beschriebenen Schriften beschriebenen Verfahren ist, daß die damit erhältlichen strahlungshärtbaren Verbindungen den heutigen Anforderungen an Abriebfestigkeit, Chemikalienresistenz und Zähigkeit für Beschichtungssysteme nicht genügen.

Aufgabe der vorliegenden Erfindung war es daher einkomponentige strahlungshärtbare (Meth)acrylaten zu entwickeln, die bessere Werte für Abriebfestigkeit, Zähelastizität und Chemikalienresistenz zeigen als die im Stand der Technik bekannten strahlungshärtbaren (Meth)acrylate.

Die Aufgabe wurde gelöst durch strahlungshärtbare Urethan(meth)acrylate, erhältlich durch die Reaktionsschritte umfassend
a) teilweise Umsetzung eines alkoxylierten Polyols (A) mit (Meth)acrylsäure (B) in Anwesenheit mindestens eines Veresterungskatalysators (C) und mindestens eines Polymerisationsinhibitors (D) sowie gegebenenfalls eines mit Wasser ein Azeotrop bildenden Lösungsmittels (E),
b) gegebenenfalls Entfernen zumindest eines Teils des in a) entstehenden Wassers aus dem Reaktionsgemisch, wobei b) während und/oder nach a) erfolgen kann,
f) gegebenenfalls Neutralisation des Reaktionsgemischs,
h) falls ein Lösungsmittel (E) eingesetzt wurde gegebenenfalls Entfernen dieses Lösungsmittels durch Destillation und/oder
i) Strippen mit einem unter den Reaktionsbedingungen inerten Gas,
k) Umsetzung des nach dem letzten der vorstehenden Reaktionsschritte erhaltenen Reaktionsgemisches mit einer mindestens zwei Epoxygruppen aufweisenden Verbindung (G) gegebenenfalls in Gegenwart eines Katalysators (H) und
l) Umsetzung des Reaktionsgemisches aus k) mit mindestens einem Polyisocyanat (J) und mindestens einem Hydroxyalkyl(meth)acrylat (K) und gegebenenfalls mindestens einer weiteren eine oder mehrere gegenüber Isocyanat reaktive Gruppe enthaltenden Verbindung (M) gegebenenfalls in Gegenwart eines Katalysators (L).

Der Begriff (Meth)acrylsäure bzw. (Meth)acrylsäureester steht in dieser Schrift für Methacrylsäure und Acrylsäure bzw. Methacrylsäureester und Acrylsäureester. Bevorzugt ist erfindungsgemäß Acrylsäure.

Erfindungsgemäß einsetzbare alkoxylierte Polyole (A) sind Verbindungen, die mindestens zwei Hydroxyfunktionen (-OH) aufweisen, bevorzugt mindestens drei, besonders bevorzugt drei bis zehn, ganz besonders bevorzugt drei bis sechs, insbesondere drei bis vier und speziell drei.

Die Polyole können aliphatisch, cycloaliphatisch oder aromatisch sein, bevorzugt aliphatisch oder cycloaliphatisch und ganz besonders bevorzugt aliphatisch, geradkettig oder verzweigt und gegebenenfalls substituiert mit funktionellen Gruppen.

In der Regel weisen die Polyole 4 bis 50 Kohlenstoffatome auf, bevorzugt 5 bis 40, besonders bevorzugt 6 bis 30 und ganz besonders bevorzugt 8 bis 26.

Das Molgewicht der einsetzbaren Polyole beträgt in der Regel, wenn nicht anders angegeben, unter 2500 g/mol, bevorzugt unter 2000 g/mol, besonders bevorzugt 106 -1500 g/mol, ganz besonders bevorzugt 150 -1200 g/mol und insbesondere 170 - 1050 g/mol. Die Polydispersität M_{w}:Mₙ beträgt in der Regel von 1 bis 5, bevorzugt von 1 bis 3.

Bevorzugte Polyole können auch funktionelle Gruppen tragen oder unfunktionalisiert sein, bevorzugt tragen sie keine weiteren funktionellen Gruppen.

Beispiele dafür sind Trimethylolbutan, Trimethylolpropan, Trimethylolethan, Neopentylglykol, Hydroxypivalinsäureneopentylglykolester, Pentaerythrit, Glycerin, 1,2-Ethylenglykol, 1,2-Propylenglykol, 1,3-Propandiol, 2-Ethyl-1,3-Propandiol, 2-Methyl-1,3-Propandiol, Hydrochinon, Bisphenol A, Bisphenol F, Bisphenol B, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, But-2-en-1,4-diol und But-2-in-1,4-diol.

Die Polyole können auch noch zusätzlich funktionelle Gruppen tragen wie z.B. Etherfunktionen (-O-), Carboxylfunktionen (-COOH) oder C₁-C₆-Alkyloxycarbonylfunktionen (Estergruppen), wobei C₁-C₄-Alkyl in dieser Schrift Methyl, Ethyl, *iso*-Propyl, n-Propyl, n-Butyl, *iso*-Butyl, *sek*-Butyl oder *tert*-Butyl und C₁-C₅-Alkyl darüberhinaus n-Pentyl, iso-Pentyl-, neo-Pentyl-, n-Hexyl-, isoHexyl- oder neo-Hexyl- bedeutet.

Beispiele für solche funktionalisierten Polyole sind Ditrimethylolpropan, Dipentaerythrit, Dimethylolpropionsäure, Dimethylolbuttersäure, Trimethylolessigsäure, Hydroxypivalinsäure und die 2-Hydroxyethyl- oder C₁-C₄-Alkylester dieser genannten Säuren.

Besonders bevorzugte Polyole sind solche der Formel (I):

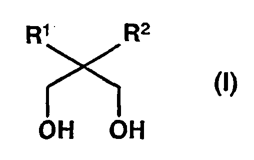

Darin bedeuten
- R¹, R²: unabhängig voneinander Wasserstoff, C₁ - C₁₀-Alkyl, bevorzugt C₁ - C₄-Alkyl, C₁ - C₁₀-Hydroxyalkyl, bevorzugt Hydroxy-C₁ - C₄-Alkyl, Carboxyl oder C₁ - C₄-Alkyloxycarbonyl, bevorzugt Wasserstoff, Hydroxymethyl und C₁ - C₄-Alkyl und besonders bevorzugt Hydroxymethyl und C₁ - C₄-Alkyl.

Dabei können die Alkylreste jeweils geradkettig oder verzweigt sein.

Beispiele für R¹ und R² sind Wasserstoff, Methyl, Ethyl, *iso*-Propyl, n-Propyl, n-Butyl, *iso*-Butyl, *sek*-Butyl, *tert*-Butyl, n-Pentyl, n-Hexyl, n-Heptyl, n-Octyl, n-Decyl, Hydroxymethyl, Carboxyl, Methoxycarbonyl, Ethoxycarbonyl oder n-Butoxycarbonyl, bevorzugt Wasserstoff, Hydroxymethyl, Methyl und Ethyl, besonders bevorzugt Hydroxymethyl, Methyl und Ethyl.

Besonders bevorzugte mehrwertige Alkohole der Formel (I) sind Trimethylolbutan, Trimethylolpropan, Trimethylolethan, Neopentylglykol, Pentaerythrit, 2-Ethyl-1,3-Propandiol, 2-Methyl-1,3-Propandiol, 1,3-Propandiol, Dimethylolpropionsäure, Dimethylolpropionsäuremethylester, Dimethylolpropionsäureethylester, Dimethylolbuttersäure, Dimethylolbuttersäuremethylester oder Dimethylolbuttersäureethylester, bevorzugt sind Neopentylglykol, Trimethylolpropan, Pentaerythrit und Dimethylolpropionsäure, ganz besonders bevorzugt sind Neopentylglykol, Trimethylolpropan und Pentaerythrit und insbesondere Trimethylolpropan und Pentaerythrit.

Beispiele für Zuckeralkohole als Polyole sind Sorbit, Mannit, Maltit, Isomalt, Diglycerol, Threit, Erythrit, Adonit (Ribit), Arabit (Lyxit), Xylit und Dulcit (Galactit).

Alkoxylierte Polyole (A) sind somit erfindungsgemäß solche, die durch Umsetzung eines Polyols mit mindestens einem Alkylenoxid erhältlich sind.

Bevorzugte Beispiele für derartige alkoxylierte Polyole sind die Alkoxylierungsprodukte (IIa), (IIb) oder (IIc) von Polyolen der Formel (1), 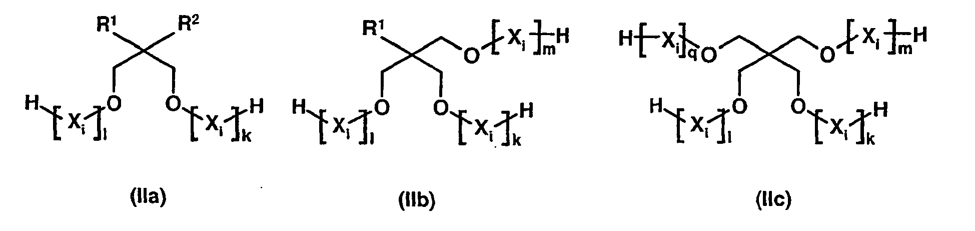 worin
- R¹, R²: die oben genannten Bedeutungen haben,
- k, l, m, q: unabhängig voneinander je für eine ganze Zahl von 0 bis 10, bevorzugt 2 bis 7, besonders bevorzugt 3 bis 6 und insbesondere 5 steht, wobei die Summe k+l+m+q 1 bis 20 ergibt, und
jedes Xᵢ für i = 1 bis k, 1 bis l, 1 bis m und 1 bis q unabhängig voneinander ausgewählt sein kann aus der Gruppe CH₂CH₂O, CH₂CH(CH₃)O, CH(CH₃)CH₂O, CH₂C(CH₃)₂O, C(CH₃)₂CH₂O, CH₂CHVinO, CHVinCH₂O, CH₂CHPhO und CHPhCH₂O, bevorzugt aus der Gruppe CH₂CH₂O, CH₂CH(CH₃)O und CH(CH₃)CH₂O, und besonders bevorzugt CH₂CH₂O,
worin Ph für Phenyl und Vin für Vinyl steht.

Unter diesen besonders bevorzugt sind solche mehrwertigen Alkohole der Formel (IIb).

Bevorzugt handelt es sich dabei um ein- bis 20fach, besonders bevorzugt 5- bis 20fach, ganz besonders bevorzugt 10 - 20fach und insbesondere 12 - 20fach ethoxyliertes, propoxyliertes oder gemischt ethoxyliertes und propoxyliertes und insbesondere ausschließlich ethoxyliertes Trimethylolpropan, Trimethylolethan oder Pentaerythrit.

Die angegebenen Alkoxylierungsgrade beziehen sich dabei jeweils auf den mittleren Alkoxylierungsgrad, so daß statistisch auch nichtganzzahlige Alkoxylierungsgrade vorkommen können.

Die Angaben zum zahlenmittleren und gewichtsmittleren Molekulargewicht Mₙ und M_{w} beziehen sich hier auf gelpermeationschromatographische Messungen, wobei Polystyrol als Standard und Tetrahydrofuran als Elutionsmittel verwendet wurde. Die Methode ist im Analytiker Taschenbuch Bd. 4, Seiten 433 bis 442 , Berlin 1984 beschrieben.

Die Polydispersität M_{w}/Mₙ, der Quotient aus dem gewichtsmittleren und dem zahlenmittleren Molekulargewicht der alkoxylierten Polyole (A), stellt ein Maß für die Molekulargewichtsverteilung dar und hat im Idealfall den Wert 1, jedoch genügen für die Praxis in der Regel Werte unter 4,0, bevorzugt unter 3,5.

Beispiele für alkoxylierte Zuckeralkohole sind solche Verbindungen, die aus Zuckeralkoholen, beispielsweise den oben aufgeführten Zuckeralkoholen, durch Alkoxylierung, beispielsweise mit den oben aufgeführten Alkylenoxiden, bevorzugt mit Ethylenoxid und/oder Propylenoxid und ganz besonders bevorzugt mit Ethylenoxid erhältlich sind.

Beispiele dafür sind
- die aufgeführten Tetrole, die im statistischen Mittel pro mol Zuckeralkohol 2 - 30fach, bevorzugt 2 - 20fach, besonders bevorzugt 3-10fach und insbesondere 3, 4, 5, 6, 7 oder 8fach alkoxyliert sind,
- die aufgeführten Pentole, die im statistischen Mittel pro mol Zuckeralkohol 3 - 35fach, bevorzugt 3-28fach, besonders bevorzugt 4-20fach und insbesondere 4, 5, 6, 7, 8, 9 oder 10fach alkoxyliert sind,
- höhere Zuckeralkohole, die im statistischen Mittel pro mol Zuckeralkohol 4-50fach, bevorzugt 6-40fach, besonders bevorzugt 7-30fach, ganz besonders bevorzugt 8-20fach und insbesondere 10-15fach alkoxyliert sind.

Die Umsetzung von Alkoholen mit einem Alkylenoxid ist dem Fachmann an sich bekannt. Mögliche Durchführungsformen finden sich in Houben-Weyl, Methoden der Organischen Chemie, 4. Auflage, 1979, Thieme Verlag Stuttgart, Hrsg. Heinz Kropf, Band 6/1 a, Teil 1, Seiten 373 bis 385.

Werden gemischt alkoxylierte Alkohole verwendet, so können die darin enthaltenen unterschiedlichen Alkoxygruppen zueinander im molaren Verhältnis von beispielsweise 0,05 - 20 : 1, bevorzugt 0,1 -10 : 1 und besonders bevorzugt 0,2 - 5 : 1 stehen.

An die Viskosität der erfindungsgemäß einsetzbaren alkoxylierten Polyole (A) werden keine besonderen Ansprüche gestellt, außer daß sie bei einer Temperatur bis zu ca. 80 °C problemlos pumpbar sein sollten, bevorzugt sollten sie eine Viskosität unter 2000 mPas aufweisen, bevorzugt unter 1500 mPas und ganz besonders bevorzugt unter 1000 mPas bei 60 °C.

(Meth)acrylsäure (B) ist, wie oben angeführt, Methacrylsäure oder bevorzugt Acrylsäure.

Das Molverhältnis von alkoxyliertem Polyol (A) : (Meth)acrylsäure (B) ist in der Veresterung beispielsweise 1 : 0,75 - 2,5, bevorzugt 1 : 0,8 - 2, besonders bevorzugt 1 : 0,9 - 1,5 und ganz besonders bevorzugt 1 : 1 - 1,2.

Veresterungskatalysatoren (C) sind Schwefelsäure, Aryl- oder Alkylsulfonsäuren oder Gemische davon. Beispiele für Arylsulfonsäuren sind Benzolsulfonsäure, para-Toluolsulfonsäure oder Dodecylbenzolsulfonsäure, Beispiele für Alkylsulfonsäuren sind Methansulfonsäure, Ethansulfonsäure oder Trifluormethansulfonsäure. Auch stark saure Ionentauscher oder Zeolithe sind als Veresterungskatalysatoren einsetzbar. Bevorzugt sind para-Toluolsulfonsäure, Schwefelsäure und Ionentauscher.

Als Polymerisationsinhibitoren (D) können beispielsweise Hydrochinon, Hydrochinonmonomethylether, 2,5-Di-t-butylhydrochinon, 2,6-Di-t-butyl-p-cresol, Nitrosoverbindungen wie Isoacrylnitrit, Nitrosodiphenylamin oder N-Nitroso-cyclohexylhydroxylamin, Methylenblau, Phenothiazin, Gerbsäure oder Diphenylamin eingesetzt werden. Es ist im Rahmen der vorliegenden Erfindung auch möglich, daß zwei oder mehr dieser Polymerisationsinhibitoren eingesetzt werden. Die Polymerisationsinhibitoren werden in Mengen von 1 bis 10000 ppm, insbesondere von 100 bis 1000 ppm, jeweils bezogen auf den gesamten Ansatz, eingesetzt.

Als Polymerisationsinhibitoren sind beispielsweise weiterhin geeignet phenolische Verbindungen, Amine, Nitroverbindungen, phosphor- oder schwefelhaltige Verbindungen, Hydroxylamine und N-Oxyle, sowie gegebenenfalls Gemische davon.

Bevorzugt sind solche Polymerisationsinhibitoren wie Phenothiazin, N-Oxyle oder phenolische Verbindungen.

N-Oxyle (Nitroxyl- oder N-Oxyl-Radikale, Verbindungen, die wenigstens eine >NO• -Gruppe aufweisen), sind z.B. 4-Hydroxy-2,2,6,6-tetramethyl-piperidin-N-oxyl oder 4-Oxo-2,2,6,6-tetramethyl-piperidin-N-oxyl.

Phenolische Verbindungen sind z.B. Alkylphenole, beispielsweise 2-tert.-Butyl-4-methylphenol, 6-tert.-Butyl-2,4-dimethyl-phenol, 2,6-Di-tert.-Butyl-4-methylphenol, Brenzcatechin (1,2-Dihydroxybenzol), Bisphenol A, Bisphenol F, Bisphenol B, Koresin® der BASF AG, Irganox® 565, 1141, 1192, 1222 und 1425 der Firma Ciba Spezialitätenchemie, Aminophenole, wie z.B. paraAminophenol, Nitrosophenole, wie z.B. para-Nitrosophenol, Alkoxyphenole, beispielsweise 2-Methoxyphenol (Guajacol, Brenzcatechinmonomethylether), 2-Ethoxyphenol, 2-Isopropoxyphenol, 4-Methoxyphenol (Hydrochinonmonomethylether), Tocopherole, Chinone und Hydrochinone wie z.B. Hydrochinon, 2,5-Di-*tert*.-Butylhydrochinon, Benzochinon, p-Phenoxyphenol, Anthrachinon oder 2,5-Di-tert.-Amylhydrochinon.

Aromatische Amine sind z.B. N,N-Diphenylamin, Phenylendiamine sind z.B. N,N'-Dialkyl-paraphenylendiamin, beispielsweise N,N'-Di-*sek-*butyl-para-phenylendiamin, Hydroxylamine sind z.B. N,N-Diethylhydroxylamin, phosphorhaltige Verbindungen sind z.B. Triphenylphosphin, Triphenylphosphit oder Triethylphosphit, schwefelhaltige Verbindungen sind z.B. Diphenylsulfid.

Bevorzugt sind Phenothiazin, p-Aminophenol, p-Nitrosophenol, 2-*tert*.-Butylphenol, 4-*tert.-*Butylphenol, 2,4-di-*tert*.-Butylphenol, 2-Methyl-4-*tert*.-Butylphenol, 4-*tert*.-Butyl-2,6-dimethylphenol, Hydrochinon und/oder Hydrochinonmonomethylether und N,N'-Di-*sek-*butyl-paraphenylendiamin.

Ganz besonders bevorzugt sind Phenothiazin, Hydrochinonmonomethylether und Gemische daraus.

Weiterhin werden häufig phosphorhaltige Verbindungen, wie z.B. Triphenylphosphin, Triphenylphosphit, Hypophosphorige Säure oder Triethylphosphit eingesetzt, gegebenenfalls in Kombination mit Metallsalzen, wie beispielsweise die Chloride, Dithiocarbamate, Sulfate, Salicylate oder Acetate von Kupfer, Mangan, Cer, Nickel oder Chrom.

Die Art der Zugabe des Polymerisationsinhibitors ist nicht beschränkt. Der zugesetzte Polymerisationsinhibitors kann jeweils einzeln oder als Gemisch zugesetzt werden, in flüssiger oder in einem geeigneten Lösungsmittel gelöster Form, wobei das Lösungsmittel selber ein Polymerisationsinhibitor sein kann, wie z.B. in der älteren deutschen Patentanmeldung mit dem Aktenzeichen 102 00 583.4 beschrieben.

Wird ein Gemisch mehrerer Polymerisationsinhibitoren eingesetzt, so können diese auch unabhängig voneinander in unterschiedlichen Lösungsmitteln gelöst werden.

Zur weiteren Unterstützung der Stabilisierung kann ein sauerstoffhaltiges Gas, bevorzugt Luft oder ein Gemisch aus Luft und Stickstoff (Magerluft) anwesend sein.

Erfindungsgemäß einsetzbare Lösungsmittel (E) sind besonders solche, die sich zur azeotropen Entfernung des Reaktionswassers, falls gewünscht, eignen, vor allem aliphatische, cycloaliphatische und aromatische Kohlenwasserstoffe oder Gemische davon.

Vorzugsweise kommen n-Pentan, n-Hexan, n-Heptan, Cyclohexan, Methylcyclohexan, Benzol, Toluol oder Xylol zur Anwendung. Besonders bevorzugt sind Cyclohexan, Methylcyclohexan und Toluol.

Für die Veresterung können die dem Fachmann bekannten Herstell- und/oder Aufarbeitungsverfahren von mehrwertigen Alkoholen angewendet werden, beispielsweise die eingangs erwähnten oder die in DE-A 199 41 136, DE-A 38 43 843, DE-A 38 43 854, DE-A 199 37 911, DE-A 199 29 258, EP-A 331 845, EP 554 651 oder US 4187 383 beschriebenen.

Im allgemeinen kann die Veresterung wie folgt durchgeführt werden:

Die Veresterungsapparatur besteht aus einem gerührten Reaktor, bevorzugt aus einem Reaktor mit Umlaufverdampfer und einer aufgesetzten Destillationseinheit mit Kondensator und Phasentrenngefäß.

Bei dem Reaktor kann es sich beispielsweise um einen Reaktor mit Doppelwandheizung oder/und innenliegenden Heizschlangen handeln. Vorzugsweise wird ein Reaktor mit außenliegendem Wärmetauscher und Natur- oder Zwangsumlauf, d.h. unter Verwendung einer Pumpe, eingesetzt.

Selbstverständlich kann die Reaktion auch in mehreren Reaktionszonen, beispielsweise einer Reaktorkaskade aus zwei bis vier, bevorzugt zwei bis drei Reaktoren durchgeführt werden.

Geeignete Umlaufverdampfer sind dem Fachmann bekannt und beispielsweise beschrieben in R. Billet, Verdampfertechnik, HTB-Verlag, Bibliographisches Institut Mannheim, 1965, 53. Beispiele für Umlaufverdampfer sind Rohrbündelwärmetauscher, Plattenwärmetauscher, etc.

Selbstverständlich können im Umlauf auch mehrere Wärmetauscher vorhanden sein.

Die Destillationseinheit ist von an sich bekannter Bauart. Dabei kann es sich um eine einfache Destillation handeln, die gegebenenfalls mit einem Spritzschutz ausgestattet ist, oder um eine Rektifikationskolonne. Als Kolonneneinbauten kommen prinzipiell alle gängigen Einbauten in Betracht, beispielsweise Böden, Packungen und/oder Schüttungen. Von den Böden sind Glockenböden, Siebböden, Ventilböden, Thormannböden und/oder Dual-Flow-Böden bevorzugt, von den Schüttungen sind solche mit Ringen, Wendeln, Sattelkörpern oder Geflechten bevorzugt.

In der Regel sind 5 bis 20 theoretische Böden ausreichend.

Der Kondensator und das Trenngefäß sind von herkömmlicher Bauart.

Carbonsäure (B) und alkoxyliertes Polyol (A) werden in der Veresterung a) in der Regel im molaren Überschuß wie oben angegeben bezogen auf die Hydroxygruppen des Alkohols eingesetzt.

Als Veresterungskatalysatoren (C) kommen die oben angeführten in Frage.

Sie werden in der Regel in einer Menge von 0,1-5 Gew.-%, bezogen auf das Veresterungsgemisch, eingesetzt, bevorzugt 0,15 - 5, besonders bevorzugt 0,2 - 4 und ganz besonders bevorzugt 0,25 - 3 Gew.%.

Falls erforderlich kann der Veresterungskatalysator aus dem Reaktionsgemisch mit Hilfe eines Ionenaustauschers entfernt werden. Der Ionenaustauscher kann dabei direkt in das Reaktionsgemisch gegeben und anschließend abfiltriert oder das Reaktionsgemisch kann über eine lonenaustauscherschüttung geleitet werden.
Bevorzugt wird der Veresterungskatalysator im Reaktionsgemisch belassen. Handelt es sich jedoch bei dem Katalysator um einen Ionentauscher, so wird dieser bevorzugt entfernt, beispielsweise durch Filtration.

Zur weiteren Unterstützung der Stabilisierung kann ein sauerstoffhaltiges Gas, bevorzugt Luft oder ein Gemisch aus Luft und Stickstoff (Magerluft) anwesend sein.

Dieses sauerstoffhaltige Gas wird vorzugsweise in den Sumpfbereich einer Kolonne und/oder in einen Umlaufverdampfer eindosiert und/oder durch das Reaktionsgemisch und/oder über dieses geleitet.

Das Polymerisationsinhibitor(gemisch) D (wie oben angeführt) wird in einer Gesamtmenge von 0,01 -1 Gew.-%, bezogen auf das Veresterungsgemisch, eingesetzt, bevorzugt 0,02 - 0,8, besonders bevorzugt 0,05 - 0,5 Gew.-%.

Das Polymerisationsinhibitor(gemisch) (D) kann beispielsweise als wäßrige Lösung oder als Lösung in einem Edukt oder Produkt eingesetzt werden.

b) Das bei der Reaktion entstehende Reaktionswasser kann während oder nach der Veresterung a) abdestilliert werden, wobei dieser Vorgang durch ein mit Wasser ein Azeotrop bildendes Lösungsmittel unterstützt werden kann. Bevorzugt wird der wesentliche Teil des während der Veresterung entstehenden Wassers abgetrennt.

Als Lösungsmittel (E) zur azeotropen Entfernung des Reaktionswassers eignen sich die oben angeführten Verbindungen.

Bevorzugt ist die Durchführung der Veresterung in Gegenwart eines Lösungsmittels.

Die eingesetzte Menge an Lösungsmittel beträgt 5 -100 Gew.-%, vorzugsweise 10-100 Gew.-%, besonders bevorzugt 15 bis 100 Gew.-% bezogen auf die Summe von Polyalkohol und Carbonsäure (B).

Denkbar ist jedoch auch eine Durchführung ohne Schleppmittel, wie sie z.B. in der DE-A1 38 43 854, Sp. 2, Z. 18 bis Sp. 4, Z. 45 beschrieben ist, jedoch im Unterschied dazu mit den oben genannten Stabilisatoren.

Falls das im Reaktionsgemisch enthaltene Wasser nicht über ein azeotropbildendes Lösungsmittel entfernt wird, so ist es möglich, dieses über Strippen mit einem inerten Gas, bevorzugt einem sauerstoffhaltigen Gas, besonders bevorzugt mit Luft oder Magerluft zu entfernen, beispielsweise wie in der DE-A 38 43 843 beschrieben.

Die Reaktionstemperatur der Veresterung a) liegt allgemein bei 40-160 °C, bevorzugt 60 - 140°C und besonders bevorzugt 80-120°C. Die Temperatur kann im Reaktionsverlauf gleichbleiben oder ansteigen, bevorzugt wird sie im Reaktionsverlauf angehoben. In diesem Fall ist die Endtemperatur der Veresterung um 5 - 30 °C höher als die Anfangstemperatur. Die Temperatur der Veresterung kann durch Variation der Lösungsmittelkonzentration im Reaktionsgemisch bestimmt und geregelt werden, wie in DE-A 199 41 136 und der deutschen Anmeldung mit dem Aktenzeichen 100 63 175.4 beschrieben.

Falls ein Lösungsmittel eingesetzt wird, so kann dieses über die dem Reaktor aufgesetzte Destillationseinheit vom Reaktionsgemisch abdestilliert werden.

Das Destillat kann wahlweise entfernt werden, oder, nach Kondensation, in einen Phasentrennapparat geführt werden. Die so erhaltene wäßrige Phase wird in der Regel ausgeschleust, die organische Phase kann als Rücklauf in die Destillationseinheit geführt und/oder direkt in die Reaktionszone geleitet werden und/oder in einen Umlaufverdampfer geführt werden, wie in der deutschen Patentanmeldung mit dem Aktenzeichen 100 63 175.4 beschrieben.

Bei Verwendung als Rücklauf kann die organische Phase, wie in der DE-A 199 41 136 beschrieben, zur Steuerung der Temperatur in der Veresterung verwendet werden.

Die Veresterung a) kann drucklos aber auch bei Überdruck oder Unterdruck durchgeführt werden, vorzugsweise wird bei normalem Druck gearbeitet.

Die Reaktionszeit beträgt in der Regel 2 - 20 Stunden, vorzugsweise 4 -17 und besonders bevorzugt 7 bis 15 Stunden.

Die Reihenfolge der Zugabe der einzelnen Reaktionskomponenten ist erfindungsgemäß nicht wesentlich. Es können alle Komponenten gemischt vorgelegt und anschließend aufgeheizt werden oder es können eine oder mehrere Komponenten nicht oder nur teilweise vorgelegt und erst nach dem Aufheizen zugegeben werden.

Die einsetzbare Carbonsäure (B) ist in ihrer Zusammensetzung nicht beschränkt und kann im Fall von Roh-(Meth)acrylsäure beispielsweise folgende Komponenten aufweisen:

| | |
|---|---|
| (Meth)acrylsäure | 90 - 99,9 Gew.-% |
| Essigsäure | 0,05 - 3 Gew.-% |
| Propionsäure | 0,01 - 1 Gew.-% |
| Diacrylsäure | 0,01 - 5 Gew.-% |
| Wasser | 0,05 - 5 Gew.-% |
| Carbonylhaltige | 0,01 - 0,3 Gew.-% |
| Inhibitoren | 0,01 - 0,1 Gew.-% |
| Maleinsäure(-anhydrid) | 0,001 - 0,5 Gew.-% |

Die eingesetzte Roh-(Meth)acrylsäure ist in der Regel stabilisiert mit 50 - 600 ppm Phenothiazin oder anderen Stabilisatoren in Mengen, die eine vergleichbare Stabilisierung ermöglichen. Unter dem Ausdruck Carbonylhaltige werden hier beispielsweise Aceton und niedere Aldehyde, wie z.B. Formaldehyd, Acetaldehyd, Crotonaldehyd, Acrolein, 2- und 3- Furfural und Benazaldehyd, verstanden.

Unter Roh-(Meth)acrylsäure wird hier das (meth)acrylsäurehaltige Gemisch verstanden, das nach. Absorption der Reaktionsgase der Propan/Propen/Acrolein- beziehungsweise Isobutan/Isobuten/Methacrolein-Oxidation in einem Absorptionsmittel und anschließender Abtrennung des Absorptionsmittels anfällt beziehungsweise das durch fraktionierende Kondensation der Reaktionsgase gewonnen wird.

Selbstverständlich kann auch Rein-(Meth)acrylsäure eingesetzt werden mit beispielsweise folgender Reinheit:

| | |
|---|---|
| (Meth)acrylsäure | 99,7 - 99,99 Gew.-% |
| Essigsäure | 50-1000 Gew.ppm |
| Propionsäure | 10 - 500 Gew.ppm |
| Diacrylsäure | 10 - 500 Gew.ppm |
| Wasser | 50-1000 Gew.ppm |
| Carbonylhaltige | 1 - 500 Gew.ppm |
| Inhibitoren | 1 - 300 Gew.ppm |
| Maleinsäure(-anhydrid) | 1 - 200 Gew.ppm |

Die eingesetzte Rein-(Meth)acrylsäure ist in der Regel stabilisiert mit 100 - 200 ppm Hydrochinonmonomethylether oder anderen Lagerstabilisatoren in Mengen, die eine vergleichbare Stabilisierung ermöglichen.

Unter reiner bzw. vorgereinigter (Meth)acrylsäure wird allgemein (Meth)acrylsäure verstanden, deren Reinheit mind. 99,5 Gew.-% beträgt und die im wesentlichen frei von den aldehydischen, anderen carbonylhaltigen und hochsiedenden Komponenten ist.

Die während der Veresterung abdestillierte wäßrige Phase des über die aufgesetzte Kolonne, wenn vorhanden, abgetrennten Kondensats, die in der Regel 0,1 - 10 Gew.-% Carbonsäure (B), beispielsweise (Meth)acrylsäure anthalten kann, wird abgetrennt und ausgeschleust. Vorteilhaft kann die darin enthaltene Carbonsäure, beispielsweise (Meth)acrylsäure mit einem Extraktionsmittel, bevorzugt dem gegebenenfalls in der Veresterung verwendeten Lösungsmittel, beispielsweise mit Cyclohexan, bei einer Temperatur zwischen 10 und 40 °C und einem Verhältnis von wäßriger Phase zu Extraktionsmittel von 1 : 5 - 30, bevorzugt 1 : 10 - 20, extrahiert und in die Veresterung zurückgeführt werden.

Zur weiteren Unterstützung des Umlaufs kann ein inertes Gas, bevorzugt ein sauerstoffhaltiges Gas, besonders bevorzugt Luft oder ein Gemisch aus Luft und Stickstoff (Magerluft) in den Umlauf, durch oder über das Reaktionsgemisch geleitet werden, beispielsweise in Mengen von 0,1-1, bevorzugt 0,2-0,8 und besonders bevorzugt 0,3-0,7 m³ sauerstoffhaltiges Gas pro m³ Volumen des Reaktionsgemisches und Stunde.

Der Verlauf der Veresterung a) kann durch Verfolgung der ausgetragenen Wassermenge und/oder die Abnahme der Carbonsäurekonzentration im Reaktor verfolgt werden.

Die Reaktion kann beispielsweise beendet werden, sobald 75 % der theoretisch zu erwartenden Wassermenge durch das Lösungsmittel ausgetragen worden sind, bevorzugt bei mindestens 80% und besonders bevorzugt bei mindestens 85%.

Das Ende der Reaktion kann beispielsweise dadurch festgestellt werden, daß im wesentlichen kein weiteres Reaktionswasser mehr über das Schleppmittel enfernt wird. Wird Carbonsäure (B) zusammen mit dem Reaktionswasser ausgetragen, so ist deren Anteil beispielsweise durch Rücktitration eines Aliquots der wäßrigen Phase bestimmbar.

Auf ein Entfernen des Reaktionswassers kann auch zumindest teilweise verzichtet werden. In diesem Fall verbleibt ein wesentlicher Teil der entstandenen Wassermenge im Reaktionsgemisch. Während oder nach der Reaktion wird lediglich der Anteil an Wasser aus dem Reaktionsgemisch entfernt, der durch die Flüchtigkeit bei der angelegten Temperatur bestimmt ist und es werden darüberhinaus keine Maßnahmen zur Abtrennung des entstandenen Reaktionswassers durchgeführt. So können beispielsweise mindestens 10 Gew.-% des entstandenen Reak-tionswassers im Reaktionsgemisch verbleiben, bevorzugt mindestens 20 Gew.-%, besonders bevorzugt mindestens 30 Gew.-%, ganz besonders bevorzugt mindestens 40 und insbesondere mindestens 50 Gew.-%.

c) Nach Beendigung der Veresterung kann das Reaktorgemisch auf übliche Weise auf eine Temperatur von 10 bis 30 °C abgekühlt werden und gegebenenfalls durch Zugabe von Lösungsmittel, das das gleiche wie das gegebenenfalls zur azeotropen Entfernung von Wasser verwendete Lösungsmittel oder ein anderes sein kann, eine beliebige Zielesterkonzentration eingestellt werden.

d) Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispiels-weise 0,1 - 50 Gew.- %, bevorzugt 0,5 bis 25 Gew.-%, besonders bevorzugt 1-10 Gew.-% bei Temperaturen von beispielsweise 10 bis 100 °C, bevorzugt 20 bis 80 °C und besonders bevorzugt 30 bis 60 °C unterworfen werden.

Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

Die Entfärbung des Reaktionsgemisches kann an beliebiger Stelle des Aufarbeitungsverfahrens erfolgen, beispielsweise auf der Stufe des rohen Reaktionsgemisches oder nach gegebenenfalls erfolgter Vorwäsche, Neutralisation, Wäsche oder Lösungsmittelentfernung.

Das Reaktionsgemisch kann weiterhin einer Vorwäsche e) und/oder einer Neutralisation f) und/oder einer Nachwäsche g) unterworfen werden, bevorzugt lediglich einer Neutralisation f). Gegebenenfalls können Neutralisation f) und Vorwäsche e) in der Reihenfolge auch vertauscht werden.

Aus der wäßrigen Phase der Wäschen e) und g) und/oder Neutralisation f) kann enthaltene Carbonsäure (B), beispielsweise (Meth)acrylsäure und/oder Katalysator (C) durch Ansäuern und Extraktion mit einem Lösungsmittel zumindest teilweise wiedergewonnen und von Neuem eingesetzt werden.

Zur Vor- oder Nachwäsche e) oder g) wird das Reaktionsgemisch in einem Waschapparat mit einer Waschflüssigkeit, beispielsweise Wasser oder einer 5 - 30 Gew.-%-igen, bevorzugt 5 - 20, besonders bevorzugt 5 -15 Gew.-%-igen Kochsalz-, Kaliumchlorid-, Ammoniumchlorid-, Natriumsulfat- oder Ammoniumsulfatlösung, bevorzugt Wasser oder Kochsalzlösung, behandelt. Das Mengenverhältnis Reaktionsgemisch : Waschflüssigkeit beträgt in der Regel 1: 0,1-1, bevorzugt 1 : 0,2 - 0,8, besonders bevorzugt 1 : 0,3 - 0,7.

Die Wäsche oder Neutralisation kann beispielsweise in einem Rührbehälter oder in anderen herkömmlichen Apparaturen, z.B. in einer Kolonne oder Mixer-Settler-Apparatur, durchgeführt werden.

Verfahrenstechnisch können für eine Wäsche oder Neutralisation im erfindungsgemäßen Verfahren alle an sich bekannten Extraktions- und Waschverfahren und apparate eingesetzt werden, z.B. solche, die in Ullmann's Encyclopedia of Industrial Chemistry, 6th ed, 1999 Electronic Release, Kapitel: Liquid - Liquid Extraction - Apparatus, beschrieben sind. Beispielsweise können dies ein- oder mehrstufige, bevorzugt einstufige Extraktionen, sowie solche in Gleich- oder Gegenstromfahrweise, bevorzugt Gegenstromfahrweise sein.

Vorzugsweise werden Siebboden- oder gepackte beziehungsweise Füllkörperkolonnen, Rührbehälter oder Mixer-Settler-Apparate, sowie gepulste Kolonnen oder solche mit rotierenden Einbauten eingesetzt.

Die Vorwäsche e) wird bevorzugt dann eingesetzt, wenn Metallsalze, bevorzugt Kupfer oder Kupfersalze als Inhibitoren (mit)verwendet werden.

Eine Nachwäsche g) kann zur Entfernung von Base- oder Salzspuren aus dem in f) neutralisierten Reaktionsgemisch vorteilhaft sein.

Zur Neutralisation f) kann das gegebenenfalls vorgewaschene Reaktionsgemisch, das noch geringe Mengen an Katalysator und die Hauptmenge an überschüssiger Carbonsäure, beispielsweise (Meth)acrylsäure enthalten kann, mit einer 5 - 25, bevorzugt 5 - 20, besonders bevorzugt 5 - 15 Gew.-%igen wäßrigen Lösung einer Base, wie beispielsweise Alkali- oder Erdalkalimetalloxide, hydroxide, carbonate oder hydrogencarbonate, bevorzugt Natronlauge, Kalilauge, Natriumhydrogencarbonat, Natriumcarbonat, Kaliumhydrogencarbonat, Kalziumhydroxid, Kalkmilch, Ammoniak, Ammoniakwasser oder Kaliumcarbonat, der gegebenenfalls 5 - 15 Gew.-% Kochsalz, Kaliumchlorid, Ammoniumchlorid oder Ammoniumsulfat zugesetzt sein können, besonders bevorzugt mit Natronlauge oder Natronlauge-Kochsalz-Lösung, neutralisiert werden. Der Neutralisationsgrad beträgt bevorzugt 5 bis 60 Mol%, vorzugsweise 10 bis 40 Mol%, besonders bevorzugt 20 bis 30 Mol%, bezogen auf die Säuregruppen enthaltenden Monomere.

Die Zugabe der Base erfolgt in einer Weise, daß die Temperatur im Apparat nicht über 60 °C ansteigt, bevorzugt zwischen 20 und 35 °C beträgt und der pH-Wert 4 -13 beträgt. Die Abfuhr der Neutralisationswärme erfolgt vorzugsweise durch Kühlung des Behälters mit Hilfe von innenliegenden Kühlschlangen oder über eine Doppelwandkühlung.

Das Mengenverhältnis Reaktionsgemisch : Neutralisationsflüssigkeit beträgt in der Regel 1:0,1 - 1, bevorzugt 1 : 0,2 - 0,8, besonders bevorzugt 1 : 0,3 - 0,7.

Hinsichtlich der Apparatur gilt das oben Gesagte.

h) Falls ein Lösungsmittel im Reaktionsgemisch enthalten ist, so kann dieses durch Destillation im wesentlichen entfernt werden. Bevorzugt wird gegebenenfalls enthaltenes Lösungsmittel nach Wäsche und/oder Neutralisation aus dem Reaktionsgemisch entfernt, falls gewünscht kann dieses aber auch vor der Wäsche beziehungsweise Neutralisation erfolgen.

Dazu kann das Reaktionsgemisch mit einer derartigen Menge an Lagerstabilisator, bevorzugt Hydrochinonmonomethylether versetzt werden, daß nach Abtrennung des Lösungsmittels 100 - 500, bevorzugt 200 - 500 und besonders bevorzugt 200 - 400 ppm davon im Zielester (Rückstand) enthalten sind.

Die destillative Abtrennung der Hauptmenge an Lösungsmittel erfolgt beispielsweise in einem Rührkessel mit Doppelwandheizung und/oder innenliegenden Heizschlangen unter vermindertem Druck, beispielsweise bei 20 - 700 mbar, bevorzugt 30 bis 500 und besonders bevorzugt 50-150 mbar und einer Temperatur von 40 - 120 °C.

Selbstverständlich kann die Destillation auch in einem Fallfilm- oder Dünnschichtverdampfer erfolgen. Dazu wird das Reaktionsgemisch, bevorzugt mehrmals im Kreislauf, unter vermindertem Druck, beispielsweise bei 20 - 700 mbar, bevorzugt 30 bis 500 und besonders bevorzugt 50-150 mbar und einer Temperatur von 40 - 80 °C durch den Apparat geführt.

Vorteilhaft kann ein inertes Gas, bevorzugt ein sauerstoffhaltiges Gas, besonders bevorzugt Luft oder ein Gemisch aus Luft und Stickstoff (Magerluft) in den Destillationsapparat eingeleitet werden, beispielsweise 0,1 -1, bevorzugt 0,2 - 0,8 und besonders bevorzugt 0,3 - 0,7 m³ sauerstoffhaltiges Gas pro m³ Reaktionsgemisch und Stunde.

Der Restlösungsmittelgehalt im Rückstand beträgt nach der Destillation in der Regel unter 5 Gew.-%, bevorzugt 0,5 - 5 % und besonders bevorzugt 1 bis 3 Gew.-%.

Das abgetrennte Lösungsmittel wird kondensiert und bevorzugt wiederverwendet.

Falls erforderlich kann zusätzlich oder anstelle der Destillation eine Lösungsmittelstrippung i) durchgeführt werden.

Dazu wird der Zielester, der noch geringe Lösungsmittelmengen enthält, auf 50 - 90 °C, bevorzugt 80 - 90 °C erwärmt und die restlichen Lösungsmittelmengen mit einem geeigneten Gas in einer geeigneten Aparatur entfernt. Zur Unterstützung kann gegebenenfalls auch ein Vakuum angelegt werden.

Geeignete Apparaturen sind beispielsweise Kolonnen von an sich bekannter Bauart, die die üblichen Einbauten, z.B. Böden, Schüttungen oder gerichtete Packungen, bevorzugt Schüttungen aufweisen. Als Kolonneneinbauten kommen prinzipiell alle gängigen Einbauten in Betracht, beispielsweise Böden, Packungen und/oder Füllkörper. Von den Böden sind Glockenböden, Siebböden, Ventilböden, Thormannböden und/oder Dual-Flow-Böden bevorzugt, von den Schüttungen sind solche mit Ringen, Wendeln, Sattelkörpern, Raschig-, Intos- oder Pall-Ringen, Barrel- oder Intalox-Sätteln, Top-Pak etc. oder Geflechten, bevorzugt.

Denkbar ist hier auch ein Fallfilm-, Dünnfilm- oder Wischfilmverdampfer, wie z.B. ein Luwa-, Rotafilm- oder Sambayverdampfer, der als Spritzschutz beispielsweise mit einem Demister ausgerüstet sein kann.

Geeignete Gase sind unter den Strippbedingungen inerte Gase, bevorzugt sauerstoffhaltige Gase, besonders bevorzugt Luft oder Gemische aus Luft und Stickstoff (Magerluft) oder Wasserdampf, insbesondere solche, die auf 50 bis 100°C temperiert sind.

Die Strippgasmenge beträgt beispielsweise 5 - 20, besonders bevorzugt 10 - 20 und ganz besonders bevorzugt 10 bis 15 m³ Strippgas pro m³ Reaktionsgemisch und Stunde.

Überschüssige Acrylsäure wird gegebenenfalls im Vakuum aus dem Reaktionsgemisch abdestilliert.

Falls notwendig kann das Veresterungsgemisch in einem beliebigen Stadium des Aufarbeitungsverfahrens, bevorzugt nach Wäsche/Neutralisation und gegebenenfalls erfolgter Lösungsmittelentfernung einer Filtration j) unterworfen werden, um ausgefallene Spuren an Salzen sowie gegebenenfalls enthaltenem Entfärbungsmittel zu entfernen.

Weiterhin verbleibt der eingesetzte Veresterungskatalysator (C) im wesentlichen im Reaktionsgemisch.

Auf eine Vor- oder Nachwäsche e) oder g) wird bevorzugt verzichtet, lediglich ein Filtrationsschritt j) kann sinnvoll sein. Ebenfalls wird auf eine Neutralisation f) bevorzugt verzichtet.

Die Abfolge der Schritte c), j) und gegebenenfalls f) ist dabei beliebig.

Das so erhältliche Reaktionsgemisch der Veresterung weist in der Regel eine Säurezahl gem. DIN EN 3682 bis zu 200 mg KOH/g, bevorzugt von 5 bis 100, besonders bevorzugt von 5 bis 50 und ganz besonders bevorzugt von 5 bis 30 mg KOH/g auf und eine OH-Zahl gem. DIN 53240 bis zu 120 mg KOH/g, bevorzugt von 10 bis 100, besonders bevorzugt von 15 bis 70 und ganz besonders bevorzugt von 20 bis 90 mg KOH/g auf.

Es enthält im wesentlichen 20 bis zu 80 Gew.-% vollständig verestertes alkoxyliertes Polyol (A), 20 bis 50 Gew.-% nicht oder teilweise verestertes alkoxyliertes Polyol (A), von 0,001 bis zu 25 Gew.-% nicht umgesetzte (Meth)acrylsäure (B), von 0,1 bis 5 Gew.-% Veresterungskatalysator (C) und 0,01 bis 1 Gew.-% Polymerisationsinhibitor (D) sowie gegebenenfalls Lösungsmittel (E), mit der Maßgabe, daß die Gesamtsumme 100 Gew.-% beträgt.

k) Das so nach dem letzten der vorstehenden Reaktionsschritte erhaltene Reaktionsgemisch der Veresterung wird in eine Folgestufe eingesetzt, in der es mit einer mindestens zwei Alkylenoxideinheiten enthaltenden Verbindung (G) umgesetzt wird.

Verwendbare Epoxidverbindungen (G) sind solche mit mindestens zwei, bevorzugt mit zwei bis vier, besonders bevorzugt zwei oder drei und ganz besonders bevorzugt mit zwei Epoxidgruppen im Molekül.

In Betracht kommen z.B. Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ, deren vollständig hydrierte Derivate und Glycidylether mehrwertiger Alkohole, z.B. des 1,4-Butandiol, 1,4-Cyclohexandimethanol, Neopentylglykol, des 1,6-Hexandiol, des Glycerin, Trimethylolpropan und des Pentaerythrit. Beispiele für derartige Polyepoxidverbindungen sind Epikote® 812 und Epikote® 828, Epikote® 1001, Epikote® 1007 und Epikote® 162 der Firma Resolution Performance Products, Rütapox® 0162, Rütapox® 0164 und Rütapox® 0165 der Firma Bakelite AG, Araldit® DY 0397 der Firma Vantico AG.

Ganz besonders bevorzugt sind Bisphenol-A-diglycidylether, 1,4-Butandiol-diglycidylether, Trimethylolpropantriglycidylether und Pentaerythrittetraglycidylether, insbesondere Bisphenol-A-diglycidylether.

Die Epoxidverbindungen (G) werden dem Reaktionsgemisch aus der Veresterung im allgemeinen in Mengen von 5 - 60 Gew.-%, bevorzugt 5 - 30 Gew.-% und besonders bevorzugt 5 - 20 Gew.-%, bezogen auf das Reaktionsgemisch (ohne Lösungsmittel), zugegeben. Ganz besonders bevorzugt werden die Epoxidverbindungen in ungefähr äquimolaren Mengen, bezogen auf die noch vorhandenen Säureäquivalente im Reaktionsgemisch, eingesetzt, beispielsweise ein Verhältnis Epoxidgruppen : Säuregruppen von 0,8 - 2,5 : 1, bevorzugt 0,9 - 2,0 : 1, besonders bevorzugt 1,0 -1,5 : 1 und ganz besonders bevorzugt 1,0 - 1,2 : 1 mol/mol.

Bei der Umsetzung mit den Epoxidverbindungen (G) wird überschüssig eingesetzte bzw. nicht umgesetzte Säure, insbesondere (Meth)acrylsäure als Epoxidester gebunden, daneben aber auch z.B. noch im Gemisch als Ausgangsstoff vorhandene Hydroxyverbindungen.

Die Umsetzung mit Epoxidverbindungen erfolgt bevorzugt bei 90 bis 130, besonders bevorzugt bei 100 bis 110°C und wird so lange durchgeführt, bis das Reaktionsgemisch eine Säurezahl gem. DIN EN 3682 unter 5, besonders bevorzugt unter 2 mg KOH/g (ohne Lösungsmittel) aufweist.

Als Katalysatoren (H) für die Umsetzung der Epoxidverbindungen mit den im Reaktionsschritt k) können z.B. quartäre Ammonium- oder Phosphoniumverbindungen, tertiäre Amine, Phosphine wie Triphenylphosphin oder Lewisbasen wie Thiodiglycol eingesetzt werden.

Die Katalysatoren werden bevorzugt in Mengen von 0,01 bis 5, besonders bevorzugt von 0,1 bis 3 Gew.-%, bezogen auf das Reaktionsgemisch, verwendet.

Die Temperatur der Reaktion beträgt mindestens 40 °C, bevorzugt 40 bis 130 °C, besonders bevorzugt 50 bis 120 und ganz besonders bevorzugt 60 bis 120 °C.

Das so erhältliche Reaktionsgemisch aus der Epoxidierung weist in der Regel eine Säurezahl gem. DIN EN 3682 unter 5, bevorzugt unter 4 mg KOH/g auf und eine OH-Zahl gem. DIN 53240 bis zu 250 mg KOH/g, bevorzugt bis zu 150, besonders bevorzugt von 10 bis 100 und ganz besonders bevorzugt von 20 bis 90 mg KOH/g auf.

Es enthält im wesentlichen von 20 bis zu 80 Gew.-% vollständig verestertes Polyol (A), 20 bis 50 Gew.-% nicht oder teilweise verestertes Polyol (A), 0,001 bis zu 25 Gew.-% epoxydiertes nicht oder teilweise verestertes Polyol (A), 0,1 bis 15 Gew.-% Epoxyester der (Meth)acrylsäure, Veresterungskatalysator und Polymerisationsinhibitor, Spuren unumgesetzter (Meth)acrylsäure sowie gegebenenfalls Lösungsmittel, mit der Maßgabe, daß die Gesamtsumme 100 Gew.-% beträgt.

l) Das so erhältliche Reaktionsgemisch aus k) wird in eine Folgestufe eingesetzt, in der es mit mindestens einem Polyisocyanat (J) und mindestens einem Hydroxyalkyl(meth)acrylat (K) sowie gegebenenfalls mindestens einer Verbindung (M) mit einer oder mehreren gegen Isocyanat reaktiven Gruppe umgesetzt wird.

Als Polyisocyanat (J) kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendüsocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-oder 2,4'-Di(isocyanatocyclohexyl)methan, 1-Isocyanato-3,3,5- trimethyl-5-(isocyanatomethyl)-cyclohexan(Isophorondiisocyanat), 1,3- oder 1,4-Bis(isocyanatomethyl)cyclohexan oder 2,4-, oder 2,6-Diisocyanato-1-methylcydohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat. Es können auch Gemische der genannten Diisocyanate vorliegen.

Bevorzugt sind 2,4- oder 2,6-Toluylendiisocyanat und deren Isomerengemische, Hexamethylendiisocyanat, 1,3-Bis(isocyanatomethyl)cyclohexan, Isophorondiisocyanat und Di(isocyanatocyclohexyl)methan.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew.-% bezogen auf das Di- und Polyisocyanat(gemisch), bevorzugt 15 bis 60 Gew.-% und besonders bevorzugt 20 bis 55 Gew.-%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Als Hydroxyalkyl(meth)acrylate (K) kommen Verbindungen in Betracht, die mindestens eine, bevorzugt 1 - 3, besonders bevorzugt 1 - 2 und ganz besonders bevorzugt eine Hydroxygruppe und mindestens eine, bevorzugt 1 - 3, besonders bevorzugt 1 - 2 und ganz besonders bevorzugt eine (Meth)acrylatgruppe tragen.

Hydroxyalkyl(meth)acrylate (K) können z.B. Monoester von (Meth)acrylsäure mit Di- oder Polyolen sein, die vorzugsweise 2 bis 20 C-Atome und wenigstens zwei, bevorzugt zwei Hydroxylgruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 378, Poly-1,3-propandiol mit einem Molgewicht zwischen 134 und 400 oder Polyethylenglykol mit einem Molgewicht zwischen 238 und 458.

Bevorzugt verwendet werden 2-Hydroxyethyl(meth)acrylat, 2- oder 3-Hydroxy-propyl(meth)-acrylat, 1,4-Butandiolmono(meth)acrylat, Neopentylglykolmono(meth)acrylat, Glycerinmono- und di(meth)acrylat, Trimethylolpropanmono- und di(meth)acrylat, Pentaerythritmono-, -di- und - tri(meth)acrylat. Besonders bevorzugt sind 2-Hydroxyethylacrylat, 2-Hydroxyethylmethacrylat, 2- oder 3-Hydroxypropylacrylat, 1,4-Butandiolmonoacrylat und 3-(Acryloyloxy)-2-hydroxypropylmethacrylat, ganz besonders bevorzugt sind 2-Hydroxyethylacrylat und 2-Hydroxyethylmethacrylat.

Falls gewünscht können gegebenenfalls Verbindungen (M) während oder nach Beendigung der Umsetzung des Reaktionsgemisches aus k) mit (J) und (K) zugegeben werden.

Dies sind solche Verbindungen mit einer oder mehreren gegenüber Isocyanat reaktiven Gruppe. Dies können beispielsweise 1 bis 20 Kohlenstoffatome aufweisende Monoalkohole, Mercaptane oder Monoamine, bevorzugt Monoalkohole sein, z.B. Methanol, Ethanol, *iso*-Propanol, n-Propanol, n-Butanol, *iso*-Butanol, *sek*-Butanol, *tert*-Butanol, Ethylenglykolmonomethylether, Ethylenglykolmonoethylether, Diethylenglykolmonomethylether, Diethylenglykolmonoethylether, 1,3-Propandiolmonomethylether, 1,2-Propandiolmonoethylether, 1,2-Propandiolmonomethylether, n-Hexanol, n-Heptanol, n-Octanol, n-Decanol, n-Dodecanol, 2-Ethylhexanol, Cyclopentanol, Cyclohexanol, Cyclooctanol, Cyclododecanol, Triethylenglykolmonomethylether, Triethylenglykolmonoethylether, n-Pentanol, Stearylalkohol, Cetylalkohol, Laurylalkohol, Cyclopent-2-en-1-ol, Cyclopent-3-en-1-ol, Cyclohex-2-en-1-ol, Allylalkohol, Methylamin, Ethylamin, *iso*-Propylamin, n-Propylamin, n-Butylamin, *iso*-Butylamin, *sek*-Butylamin, *tert*-Butylamin, n-Pentylamin, n-Hexylamin, n-Heptylamin, n-Octylamin, n-Decylamin, n-Dodecylamin, 2-Ethylhexylamin, Stearylamin, Cetylamin, Laurylamin, Dimethylamin, Diethylamin, Di-n-Propylamin, Di-*iso*-Propylamin, Di-n-Butylamin, Dihexylamin, Dioctylamin, Ethylmethylamin, *Iso*-Propyl-Methylamin, n-Butylmethylamin, *tert*-Butytmethylamin, *Iso*-Propyl-Ethylamin, n-Butylethylamin, *tert*-Butylethylamin, Cyclopentylamin, Cyclohexylamin, Cyclooctylamin, Cyclododecylamin, Morpholin, Piperidin, Pyrrolidin, N-Methylpiperazin, Monoethanolamin, Monopropanolamin, Dipropanolamin, Methanthiol, Ethanthiol, *iso-*Propanthiol, n-Propanthiol, n-Butanthiol, *iso*-Butanthiol, *sek*-Butanthiol oder *tert-*Butanthiol.

Pro NCO Moläquivalent in (J) werden 0,05 - 0,6 mol (K) und 0,2 - 0 mol (M) eingesetzt, wobei die Summe der Menge von (K)+(M) der um die molare Menge an OH- und Säuregruppen im Reaktionsgemisch aus der Stufe k) verminderten NCO-Moläquivalente entspricht. Zur Beschleunigung der Reaktion können gegebenenfalls geeignete Katalysatoren (L) eingesetzt werden.

Hierbei handelt es sich um die üblichen für diese Zwecke bekannten Katalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Katalysatoren sind insbesondere Zinkverbindungen, wie z. B. Zink(II)stearat, Zink(II)-n-octanoat, Zink(II)-2-ethyllhexanoat, Zink(II)naphthenat oder Zink(II)acetylacetonat, Zinnverbindungen, wie z. B. Zinn(II)-n-octanoat, Zinn(II)-2-ethyllhexanoat, Zinn(II)laurat, Dibutylzinnoxid, Dibutylzinndichlorid, Dibutylzinndiacetat, Dibutylzinndilaurat, Dibutylzinndimaleat oder Dioctylzinndiacetat, Aluminiumtri(ethylacetoacetat), Eisen(III)chlorid, Kaliumoctoat, Mangan, Cobalt oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das Verfahren sind auch solche Katalysatoren, wie sie beispielsweise in der EP-A-0 649 866 Seite 4, Zeile 7 bis Seite 5, Zeile 15 beschrieben sind.

Bevorzugte Katalysatoren für das erfindungsgemäße Verfahren sind Zinkverbindungen der Oben genannten Art. Ganz besonders bevorzugt ist die Verwendung Zink-(II)-n-octanoat, Zink-(II)-2-ethyllhexanoat und/oder Zink-(II)-stearat.

Diese Katalysatoren kommen, falls überhaupt, in einer Menge von 0,001 bis 5 Gew.%, vorzugsweise 0,005 bis 1 Gew.%, bezogen auf das Gesamtgewicht der Reaktionspartner zum Einsatz.

Die Umsetzung kann besonders bevorzugt in Anwesenheit von Cäsiumsalzen erfolgen, wie in der älteren deutschen Patentanmeldung mit dem Aktenzeichen 10161156.0 vom 12.12.2001 beschrieben. Bevorzugte Cäsiumsalze sind dabei Verbindungen, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Besonders bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Das durch Umsetzung mit dem Polyisocyanat (J) erhältliche Reaktionsgemisch (N) weist in der Regel keine signifikante Säurezahl, keine signifikante OH-Zahl (jeweils < 5, bevorzugt < 3, besonders bevorzugt < 2 und insbesondere < 1 mg KOH/g) und einen NCO-Gehalt (berechnet als NCO, Molgewicht 42 g/mol) von < 0,5, bevorzugt < 0,3 besonders bevorzugt < 0,2 und ganz besonders bevorzugt < 0,1 Gew.-% auf.

Das so erhältliche erfindungsgemäße Reaktionsgemisch (N) kann für strahlungshärtbare Beschichtungssysteme oder Lacke verwendet werden, die neben dem erfindungsgemäßen Reaktionsgemisch (N) noch Reaktiwerdünner (O), Photoinitiatoren (P) und andere lacktypische Additive (Q) enthalten können.

Als Reaktiwerdünner (Verbindungen (O)) kommen strahlungshärtbare, radikalisch oder kationisch polymerisierbare Verbindungen mit nur einer ethylenisch ungesättigten, copolymerisierbaren Gruppe in Betracht.

Geeignete strahlenhärtbare, radikalisch polymerisierbare Reaktiwerdünner sind z. B. die Triacrylester des Trimethylolpropan, Tetraacrylester des Pentaerythrit und deren ethoxilierten und/oder propoxylierten Derivate, Diacrylester des Dipropylenglykol, Tripropylenglykol, Diethylenglykol, 1,2-Ethandiol, 1,3- oder 1,4-Butandiol oder 1,6-Hexandiol.

Genannt seien außerdem z.B. C₁-C₂₀-Alkyl(meth)acrylate, Vinylaromaten mit bis zu 20 C-Atomen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Als vinylaromatische Verbindungen kommen z.B. Vinyltoluol, α-Butylstyrol, 4-n-Butylstyrol, 4-n-Decylstyrol und vorzugsweise Styrol in Betracht.

Als Photoinitiatoren (P) können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide Irgacure® 819 (Bis(2,4,6-Trimethylbenzoyl)phenylphosphinoxid), wie sie z.B. in EP-A 7 508, EP-A 57 474, DE-A 196 18 720,

EP-A 495 751 oder EP-A 615 980 beschrieben sind, beispielsweise 2,4,6-Trimethylbenzoyldiphenylphosphinoxid (Lucirin® TPO), Ethyl-2,4,6-trimethylbenzoylphenylphosphinat, Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert-*Butylanthrachinon, Anthrachinoncarbonysäureester, Benzaldehyd, α -Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-*iso*-propylthioxanthon, 2,4-Dichlorthioxanthon, Benzoin, Benzoin-*iso*-butylether, Chloroxanthenon, Benzoin-tetrahydropyranylether, Benzoin-methylether, Benzoinethylether, Benzoin-butylether, Benzoin-*iso*-propylether, 7-H-Benzoin-methylether, Benz[de]-anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]-anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Unter den genannten Photoinitiatoren sind Phosphinoxide, α-Hydroxyketone und Benzophenone bevorzugt.

Insbesondere können auch Gemische verschiedener Photoinitiatoren verwendet werden.

Die Photoinitiatoren können allein oder in Kombination mit einem Photopolymerisationspromotor, z.B. vom Benzoesäure-, Amin- oder ähnlichem Typ verwendet werden.

Als weitere lacktypische Additive (Q) können beispielsweise Antioxidantien, Oxidationsinhibitoren, Stabilisatoren, Aktivatoren (Beschleuniger), Füllmittel, Pigmente, Farbstoffe, Entgasungsmittel, Glanzmittel, antistatische Agentien, Flammschutzmittel, Verdicker, thixotrope Agentien, Verlaufshilfsmittel, Bindemittel, Antischaummittel, Duftstoffe, oberflächenaktive Agentien, Viskositätsmodifikatoren, Weichmacher, Plastifizierer, klebrigmachende Harze (Tackifier), Chelatbildner oder Verträglichkeitsmittel (compatibilizer, siehe unten) verwendet werden.

Weiterhin können ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis-*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Weiterhin geeignete Stabilisatoren sind beispielsweise N-Oxyle, wie z.B. 4-Hydroxy-2,2,6,6-tetramethyl-piperidin-N-oxyl, 4-Oxo-2,2,6,6-tetramethyl-piperidin-N-oxyl, 4-Acetoxy-2,2,6,6-tetramethyl-piperidin-N-oxyl, 2,2,6,6-tetramethyl-piperidin-N-oxyl, 4,4',4"-Tris(2,2,6,6-tetramethylpiperidin-N-oxyl)-phosphit oder 3-Oxo-2,2,5,5-tetramethyl-pyrrolidin-N-oxyl, Phenole und Naphthole, wie z.B. p-Aminophenol, p-Nitrosophenol, 2-*tert*.-Butylphenol, 4-*tert*.-Butylphenol, 2,4-di-*tert*.-Butylphenol, 2-Methyl-4-*tert*.-Butylphenol, 4-Methyl-2,6-*tert*.-Butylphenol (2,6-*tert.-*Butyl-p-Kresol) oder 4-*tert*.-Butyl-2,6-dimethylphenol, Chinone, wie z.B. Hydrochinon oder Hydrochinonmonomethylether, aromatische Amine, wie z.B. N,N-Diphenylamin, N-Nitrosodiphenylamin, Phenylendiamine, wie z.B. N,N'-Dialkyl-para-phenylendiamin, wobei die Alkylreste gleich oder verschieden sein können und jeweils unabhängig voneinander aus 1 bis 4 Kohlenstoffatome bestehen und geradkettig oder verzweigt sein können, Hydroxylamine, wie z.B. N,N-Diethylhydroxylamin, Harnstoffderivate, wie z.B. Harnstoff oder Thioharnstoff, phosphorhaltige Verbindungen, wie z.B. Triphenylphosphin, Triphenylphosphit oder Triethylphosphit oder schwefelhaltige Verbindungen, wie z.B. Diphenylsulfid oder Phenothiazin.

Typische Zusammensetzungen für strahlungshärtbare Massen sind beispielsweise
N) 40 -100 Gew.-%, bevorzugt 50 - 90, besonders bevorzugt 60 - 90 und insbesondere 60 - 80 Gew.-%,
O) 0 - 60 Gew.-%, bevorzugt 5 - 50, besonders bevorzugt 6 - 40 und insbesondere 10 - 30 Gew.-%,
P) 0 - 20 Gew.-%, bevorzugt 0,5 -15, besonders bevorzugt 1 -10 und insbesondere 2 - 5 Gew.-% sowie
Q) 0 - 50 Gew.-%, bevorzugt 2 - 40, besonders bevorzugt 3 - 30 und insbesondere 5 - 20 Gew.-%,
mit der Maßgabe, daß (N), (O), (P) und (Q) zusammen 100 Gew.-% ergeben.

Die erfindungsgemäßen strahlungshärtbaren Urethan(meth)acrylate eignen sich insbesondere zur Verwendung als oder in Massen, welche durch energiereiche Strahlung gehärtet werden können.

Diese Massen können als bzw. in Beschichtungsmassen, z.B. Lacken, Druckfarben, oder Klebstoffen, als Druckplatten, als Formkörper, oder als Gießmasse verwendet werden.

Substrate für die Beschichtung können beispielsweise sein Textil, Leder, Metall, Kunststoff, Glas, Holz, Papier oder Pappe, bevorzugt Holz oder Metall und besonders bevorzugt Holz.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Bechichtungsmasse, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man die Beschichtungsmasse auf das Substrat aufbringt und gegebenenfalls bei Temperaturen bis zu 160°C trocknet, mit Elektronenstrahlen oder UV Belichtung unter sauerstoffhaltiger Atmosphäre oder bevorzugt unter Inertgas härtet und gegebenenfalls anschließend bei Temperaturen bis zu 160°C nachtrocknet.

Die Trocknung kann auch zusätzlich oder anstelle der thermischen Trocknung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Gegebenenfalls kann, wenn mehrere Schichten des Beschichtungsmittels übereinander aufgetragen werden, nach jedem Beschichtungsvorgang eine thermische und/oder NIR Trocknung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Bestrahlung kann gegebenenfalls auch unter Ausschluß von Sauerstoff, z. B. unter InertgasAtmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Die erfindungsgemäßen Beschichtungsmassen eignen sich als Innen- oder Außenbeschichtungen, also solche Anwendungen, die dem Tageslicht ausgesetzt sind, bevorzugt von Gebäuden oder Gebäudeteilen, Innenbeschichtungen, Straßenmarkierungen, Beschichtungen auf Fahrzeugen und Flugzeugen. Insbesondere werden die erfindungsgemäßen Beschichtungsmassen als Holzlacke oder in Holzlacken für den Innenbereich, speziell als Parkettlacke eingesetzt.

In dieser Schrift verwendete ppm- und Prozentangaben beziehen sich, falls nicht anders angegeben, auf Gewichtsprozente und ppm.

### Beispiele

### Vorstufe A

In einer Apparatur mit Wasserabscheider wurden 1035,0 g Pluriol® A18 TERC (15-fach ethoxyliertes Trimethylolpropan) der BASF AG mit 165,0 g Acrylsäure und 6,0 g Schwefelsäure in 400,0 g Methylcyclohexan bei einer Innentemperatur von 98 bis 105°C verestert. Die Stabilisierung erfolgte mit 1,2 g t-Butyl-p-kresol, 1,2 g Triphenylphosphit, 1,2 g hypophosphoriger Säure, 3,6 g 4-Methoxyphenol und 0,036 g Phenothiazin. Nach einer Reaktionszeit von 13 Stunden wurde das Lösemittel im Vakuum (20 mbar) bei 112°C abdestilliert. Die Säurezahl nach der Destillation betrug 5 mg KOH/g. Die OH-Zahl betrug 40 mg KOH/g.

### Vorstufe B

In einer Apparatur mit Wasserabscheider wurden 1039,0 g Pluriol® A18 TERC (15-fach ethoxyliertes Trimethylolpropan) mit 304,0 g Acrylsäure und 6,1 g Schwefelsäure (96%) in 450,0 g Methylcyclohexan bei einer Innentemperatur von 98 bis 105 °C verestert. Die Stabilisierung erfolgte mit 1,2 g t-Butyl-p-kresol, 1,2 g Triphenylphosphit, 1,2 g hypophosphoriger Säure, 4,0 g 4-Methoxyphenol und 0,037 g Phenothiazin. Nach einer Reaktionszeit von 10 Stunden wurden 40,7 g wässrige Tetra(n-butyl)ammoniumbromidlösung (75 %) zugegeben und das Lösemittel im Vakuum (20 mbar) bei 112 °C abdestilliert. Die Säurezahl nach der Destillation betrug 25 mg KOH/g und die OH-Zahl 40 mg KOH/g. Die überschüssige Acrylsäure wurde mit 106 g Epikote® 828 (Bisphenol-A-diglydidylether) der Firma Resolution bei einer Temperatur von 105-110°C 2 Stunden umgesetzt. Die Säurezahl am Ende der Umsetzung betrug 2,0 mg KOH/g, die OH-Zahl 50 mg KOH/g.

### Vorstufe C

In einer Apparatur mit Wasserabscheider wurden 1039,0 g Pluriol® A18 TERC (15-fach ethoxyliertes Trimethylolpropan) mit 304,0 g Acrylsäure und 6,1 g Schwefelsäure (96%) in 450,0 g Methylcyclohexan bei einer Innentemperatur von 98 bis 105 °C verestert. Die Stabibilisierung erfolgte mit 1,2 g t-Butyl-p-kresol, 1,2 g Triphenylphosphit, 1,2 g hypophosphoriger Säure, 4,0 g 4-Methoxyphenol und 0,037 g Phenothiazin. Nach einer Reaktionszeit von 10 Stunden wurden 40,7 g wässrige Tetra(n-butyl)ammoniumbromidlösung (75 %)zugegeben und das Lösemittel im Vakuum (20 mbar) bei 112 °C abdestilliert. Die Säurezahl nach der Destillation betrug 25 mg KOH/g und die OH-Zahl 40 mg KOH/g. Die überschüssige Acrylsäure wurde mit 93,4 g Basoset® 162 (Trimethylolpropantriglydidylether) bei einer Temperatur von 105-110 °C 2 Stunden umgesetzt. Die Säurezahl am Ende der Umsetzung betrug 1,6 mg KOH/g. Die OH-Zahl betrug 55 mg KOH/g.

### Urethanacrylat A1, Vergleichsbeispiel

In einer Apparatur wurden 500 g Vorstufe A, 58 g Hydroxyethylacrylat und 0,1 g Dibutylzinnlaureat vorgelegt und auf 56 °C erwärmt. Anschließend wurden 87,2 g 2,4-Toluoldiisocyanat innerhalb von 30 min bei einer Innentemperatur von 55 bis 65 °C zugetropft. Die Reaktion wurde bei einer Innentemperatur von 65 - 70 °C 7 Stunden fortgeführt bis der Isocyanatgehalt auf 0,5 Gew.-% gefallen ist. Es wurden 3,0 g Methanol zugegeben und die Reaktion bei gleicher Temperatur ca. 3 Stunden fortgeführt bis der Isocyanatgehalt unter 0,2 Gew.-% gefallen war.

### Urethanacrylat B1

In einer Apparatur wurden 467,5 g Vorstufe B, 30 g Hydroxyethylacrylat und 0,1 g Dibutylzinnlaureat vorgelegt und auf 56 °C erwärmt. Anschließend wurden 58,2 g 2,4-Toluoldiisocyanat innerhalb von 20 min bei einer Innentemperatur von 55 bis 65 °C zugetropft. Die Reaktion wurde bei einer Innentemperatur von 65 - 70 °C 7 Stunden fortgeführt bis der Isocyanatgehalt auf 0,5 Gew.% gefallen war. Es wurden 1,5 g Methanol zugegeben und die Reaktion bei gleicher Temperatur ca. 3 Stunden fortgeführt bis der Isocyanatgehalt unter 0,2 Gew.-% gefallen war.

### Urethanacrylat B2

In einer Apparatur wurden 467 g Vorstufe B mit 0,5 g Dibutylzinnlaureat vorgelegt und auf 60°C erwärmt. Anschließend wurden 26,7 g Basonat® HI 100 (Hexamethylenisocyanurat) der BASF AG innerhalb von 10 min bei einer Innentemperatur von 60 bis 65 °C zugetropft. Die Reaktion wurde bei einer Innentemperatur von 80 - 85 °C 6 Stunden fortgeführt bis der Isocyanatgehalt unter 0,2 Gew.% gefallen war.

### Urethanacrylat C1

In einer Apparatur wurden 623,3 g Vorstufe C, 41,0 g Hydroxyethylacrylat und 0,14 g Dibutylzinnlaureat vorgelegt und auf 56 °C erwärmt. Anschließend wurden 87,1 g 2,4-Toluoldiisocyanat innerhalb von 45 min bei einer Innentemperatur von 48 bis 60°C zugetropft. Die Reaktion wurde bei einer Innentemperatur von 65 - 70 °C 7 Stunden fortgeführt bis der Isocyanatgehalt auf 0,5 Gew.% gefallen war. Es wurden 2,0 g Methanol zugegeben und die Reaktion bei gleicher Temperatur ca. 3 Stunden fortgeführt bis der Isocyanatgehalt unter 0,2 Gew.-% gefallen war.

### Urethanacrylat C2

In einer Apparatur wurden 500 g Vorstufe C, 58,0 g Hydroxyethylacrylat und 0,12 g Dibutylzinnlaureat vorgelegt und auf 56 °C erwärmt. Anschließend wurden 87,1 g 2,4-Toluoldiisocyanat innerhalb von 20 min bei einer Innentemperatur von 50 bis 55 °C zugetropft. Die Reaktion wurde bei einer Innentemperatur von 65 - 70 °C 7 Stunden fortgeführt bis der Isocyanatgehalt auf 0,5 Gew.% gefallen war. Es wurden 2,0 g Methanol zugegeben und die Reaktion bei gleicher Temperatur ca. 3 Stunden fortgeführt bis der Isocyanatgehalt unter 0,2 Gew.-% gefallen war.

### Anwendungstechnische Prüfungen

Die Beschichtungsmassen wurden mit 4 Gewichts% Photoinitiator Irgacure 500^{®} der Firma Ciba Spezialitätenchemie gemischt, auf das jeweilige Substrat aufgetragen und unter einer undotierten Quecksilberhochdrucklampe (Leistung 120 W/cm) mit einem Lampenabstand zum Substrat von 12 cm und einer Bandgeschwindigkeit von 10 m/min belichtet, so daß fingernagelfeste Beschichtungen erhalten wurden.
Die Pendelhärte (PD) wurde nach DIN 53157 bestimmt und ist ein Maß für die Härte der Beschichtung. Die Angabe erfolgt in Anzahl der Schläge bis zum Stillstand des Pendels (Sg). Hohe Werte bedeuten dabei hohe Härte. Die Filme zur Bestimmung der Pendelhärte wurden mit Hilfe einer Kastenrakel auf Glas aufgetragen. Die Schichtdicke nach der Belichtung betrug 70 *µ*m.

Die Erichsentiefung (ET) wurde nach DIN 53156 bestimmt und ist ein Maß für die Flexibilität und Elastizität. Die Angabe erfolgt in Millimeter (mm). Hohe Werte bedeuten hohe Flexibilität. Die Filme zur Bestimmung der Erichsentiefung wurden mit Hilfe einer Spiralrakel auf Blech aufgetragen. Die Schichtdicke nach der Belichtung beträgt 40 *µ*m.

Die Viskosität (Visk) wurde mit einem Kegel-Platte-Viskosimeter bei 25°C bestimmt.

Zur Bestimmung der Chemikalienbeständigkeit (CH) wurden auf einem ausgehärteten, 200 *µ*m dicken Film jeweils Ethanol, Rotwein, Kaffee, Johannisbeersaft, Senf, Lippenstift, Desinfektionsmittel, Kugelschreiberpaste und Reinigungsmittel aufgetragen und die Verfärbung visuell beurteilt. Dabei bedeuten 0 keine Verfärbung und 5 starke Verfärbung. Der Wert der Chemikalienbeständigkeit ergibt sich als Mittelwert aus den zehn Einzelwerten.

Die lodfarbzahl wurde gemäß DIN 6162 bestimmt.

Der Abrieb wurde nach der Methode "falling sand" S 39 ermittelt. Hierzu wurden die initiatorhaltigen Beschichtungsmassen auf mattierte Glasplatten aufgetragen und belichtet, so dass 40 bis 50 *µ*m dicke Filme erhalten wurden.

| Beispiel | Visk (Pa*s) | Jodfarbzahl | PD (Sg) | ET (mm) | CH 200 *µ*m 10er Wert | Abrieb fs, S 39 (mg) |
|---|---|---|---|---|---|---|
| A1 | 6,7 | 4-5 | 55 | 5,8 | 2,45 | Abriss |
| B1 | 3,0 | 2-3 | 22 | 5,5 | 2,05 | 5,7 |
| B2 | 1,8 | 2-3 | 96 | 4,2 | 2,15 | 4,7 |
| C1 | 6,4 | 3 | 30 | 4,7 | 2,15 | 6,4 |
| C2 | 6,4 | 2-3 | 28 | 5,5 | 2,15 | 3,8 |

Die erfindungsgemäßen Beispiele B1, B2, C1 und C2 weisen gegenüber dem Vergleichsbeispiel A1 eine deutlich niedrigere Jodfarbzahl und eine verbesserte Chemikalienbeständigkeit auf. Die erhöhte Zähelastizität der erfindungsgemäßen Beispiele B1, B2, C1 und C2 gegenüber dem Vergleichsbeispiel A1 zeigt sich in sehr geringen Abriebwerten von kleiner als 10 mg.

## Patentansprüche

1. Strahlungshärtbare Urethan(meth)acrylate, erhältlich durch die Reaktionsschritte umfassend
a) teilweise Umsetzung eines alkoxylierten Polyols (A) mit (Meth)acrylsäure (B) in Anwesenheit mindestens eines Veresterungskatalysators (C) und mindestens eines Polymerisationsinhibitors (D) sowie gegebenenfalls eines mit Wasser ein Azeotrop bildenden Lösungsmittels (E),
b) gegebenenfalls Entfernen zumindest eines Teils des in a) entstehenden Wassers aus dem Reaktionsgemisch, wobei b) während und/oder nach a) erfolgen kann,
f) gegebenenfalls Neutralisation des Reaktionsgemischs,
h) falls ein Lösungsmittel (E) eingesetzt wurde gegebenenfalls Entfernen dieses Lösungsmittels durch Destillation und/oder
i) gegebenenfalls Strippen mit einem unter den Reaktionsbedingungen inerten Gas und gegebenenfalls Entfernen überschüssiger Acrylsäure durch Destillieren,
k) Umsetzung des nach dem letzten der vorstehenden Reaktionsschritte erhaltenen Reaktionsgemisches mit einer mindestens zwei Epoxygruppen aufweisenden Verbindung (G) gegebenenfalls in Gegenwart eines Katalysators (H) und
l) Umsetzung des Reaktionsgemisches aus k) mit mindestens einem Polyisocyanat (J) und mindestens einem Hydroxyalkyl(meth)acrylat (K) und gegebenenfalls mindestens einer weiteren eine oder mehrere gegenüber Isocyanat reaktive Gruppen enthaltenden Verbindung (M) gegebenenfalls in Gegenwart eines Katalysators (L).

2. Verfahren zur Herstellung von strahlungshärtbaren Urethan(meth)acrylate, erhältlich durch die Reaktionsschritte umfassend
a) teilweise Umsetzung eines alkoxylierten Polyols (A) mit (Meth)acrylsäure (B) in Anwesenheit mindestens eines Veresterungskatalysators (C) und mindestens eines Polymerisationsinhibitors (D) sowie gegebenenfalls eines mit Wasser ein Azeotrop bildenden Lösungsmittels (E),
b) gegebenenfalls Entfernen zumindest eines Teils des in a) entstehenden Wassers aus dem Reaktionsgemisch, wobei b) während und/oder nach a) erfolgen kann,
f) gegebenenfalls Neutralisation des Reaktionsgemischs,
h) falls ein Lösungsmittel (E) eingesetzt wurde gegebenenfalls Entfernen dieses Lösungsmittels durch Destillation und/oder
i) gegebenenfalls Strippen mit einem unter den Reaktionsbedingungen inerten Gas und gegebenenfalls Entfernen überschüssiger Acrylsäure durch Destillieren,
k) Umsetzung des nach dem letzten der vorstehenden Reaktionsschritte erhaltenen Reaktionsgemisches mit einer mindestens zwei Epoxygruppen aufweisenden Verbindung (G) gegebenenfalls in Gegenwart eines Katalysators (H) und
l) Umsetzung des Reaktionsgemisches aus k) mit mindestens einem Polyisocyanat (J) und mindestens einem Hydroxyalkyl(meth)acrylat (K) und gegebenenfalls mindestens einer weiteren eine oder mehrere gegenüber Isocyanat reaktive Gruppen enthaltenden Verbindung (M) gegebenenfalls in Gegenwart eines Katalysators (L).

3. Strahlungshärtbare Urethan(meth)acrylate und Verfahren nach einem der vorstehenden Ansprüche, **dadurch gekennzeichnet, daß** das in k) eingesetzte Reaktionsgemisch eine Säurezahl gem. DIN EN 3682 bis zu 200 mg KOH/g und eine OH-Zahl gem. DIN 53240 bis zu 120 mg KOH/g aufweist.

4. Strahlungshärtbare Urethan(meth)acrylate und Verfahren nach einem der vorstehenden Ansprüche, **dadurch gekennzeichnet, daß** das in I) eingesetzte Reaktionsgemisch eine OH-Zahl gem. DIN 53240 bis zu 250 mg KOH/g aufweist.

5. Strahlungshärtbare Urethan(meth)acrylate und Verfahren nach einem der vorstehenden Ansprüche, **dadurch gekennzeichnet, daß** das Polyol (A) ein ein- bis 20fach ethoxyliertes Trimethylolpropan, Trimethylolethan oder Pentaerythrit ist.

6. Strahlungshärtbare Urethan(meth)acrylate und Verfahren nach einem der vorstehenden Ansprüche, **dadurch gekennzeichnet, daß** die Epoxidverbindung (G) Bisphenol-A-diglycidylether, 1,4-Butandiol-diglycidylether, Trimethylolpropantriglycidylether oder Pentaerythrittetraglycidylether ist.

7. Strahlungshärtbare Urethan(meth)acrylate und Verfahren nach einem der vorstehenden Ansprüche, **dadurch gekennzeichnet, daß** das Polyisocyanat (J) 2,4- oder 2,6-Toluylendiisocyanat und deren Isomerengemische, Hexamethylendiisocyanat, 1,3-Bis(isocyanatomethyl)cyclohexan, Isophorondiisocyanat oder Di(isocyanatocyclohexyl)methan ist.

8. Strahlungshärtbare Urethan(meth)acrylate und Verfahren nach einem der vorstehenden Ansprüche, **dadurch gekennzeichnet, daß** das Hydroxyalkyl(meth)acrylat (K) 2-Hydroxyethylacrylat oder 2-Hydroxyethylmethacrylat ist.

9. Strahlungshärtbare Beschichtungsmasse, enthaltend ein strahlungshärtbares Urethan(meth)acrylat gemäß einem der vorstehenden Ansprüche.

10. Verwendung einer Beschichtungsmasse gemäß Anspruch 9 als Holzlack für den Innenbereich.

## Claims

1. A radiation-curable urethane (meth) acrylate obtainable by the steps comprising
a) partly reacting an alkoxylated polyol (A) with (meth)acrylic acid (B) in the presence of at least one esterification catalyst (C) and at least one polymerization inhibitor (D) and also if appropriate a solvent (E) that forms an azeotrope with water,
b) removing if appropriate at least some of the water formed in a) from the reaction mixture which can be done during and/or after a),
f) neutralizing if appropriate the reaction mixture,
h) removing if appropriate any solvent (E) used by distillation and/or
i) stripping if appropriate with a gas which is inert under the reaction conditions and removing if appropriate excess acrylic acid by distilling,
k) reacting the reaction mixture obtained after the last of the above steps with a compound (G) containing at least two epoxy groups in the presence if appropriate of a catalyst (H), and
1) reacting the reaction mixture from k) with at least one polyisocyanate (J) and at least one hydroxyalkyl(meth)acrylate (K) and if appropriate with at least one further compound (M) comprising one or more isocyanate-reactive groups in the presence if appropriate of a catalyst (L).

2. A process for preparing a radiation-curable urethane (meth) acrylate obtainable by the steps comprising
a) partly reacting an alkoxylated polyol (A) with (meth)acrylic acid (B) in the presence of at least one esterification catalyst (C) and at least one polymerization inhibitor (D) and also if appropriate a solvent (E) that forms an azeotrope with water,
b) removing if appropriate at least some of the water formed in a) from the reaction mixture which can be done during and/or after a),
f) neutralizing if appropriate the reaction mixture,
h) removing if appropriate any solvent (E) used by distillation and/or
i) stripping if appropriate with a gas which is inert under the reaction conditions and removing if appropriate excess acrylic acid by distilling,
k) reacting the reaction mixture obtained after the last of the above steps with a compound (G) containing at least two epoxy groups in the presence if appropriate of a catalyst (H), and
l) reacting the reaction mixture from k) with at least one polyisocyanate (J) and at least one hydroxyalkyl(meth)acrylate (K) and if appropriate with at least one further compound (M) comprising one or more isocyanate-reactive groups in the presence if appropriate of a catalyst (L).

3. The radiation-curable urethane (meth)acrylate or process according to either of the above Claims, wherein the reaction mixture used in k) has an acid number to DIN EN 3682 of up to 200 mg KOH/g and an OH number to DIN 53240 of up to 120 mg KOH/g.

4. The radiation-curable urethane (meth)acrylate or process according to any one of the above claims, wherein the reaction mixture used in 1) has an OH number to DIN 53240 of up to 250 mg KOH/g.

5. The radiation-curable urethane (meth)acrylate or process according to any one of the above claims, wherein the polyol (A) is a pentaerythritol, trimethylolethane or trimethylolpropane with from single to 20-fold ethoxylation.

6. The radiation-curable urethane (meth)acrylate or process according to any one of the above claims, wherein the epoxide compound (G) is bisphenol A diglycidyl ether, 1,4-butanediol diglycidyl ether, trimethylolpropane triglycidyl ether or pentaerythritol tetraglycidyl ether.

7. The radiation-curable urethane (meth)acrylate or process according to any one of the above claims, wherein the polyisocyanate (J) is 2,4- or 2,6-tolylene diisocyanate or an isomer mixture thereof, hexamethylene diisocyanate, 1,3-bis(isocyanatomethyl)cyclohexane, isophorone diisocyanate or di(isocyanatocyclohexyl)methane.

8. The radiation-curable urethane (meth)acrylate or process according to any one of the above claims, wherein the hydroxyalkyl (meth)acrylate (K) is 2-hydroxyethyl acrylate or 2-hydroxyethyl methacrylate.

9. A radiation-curable coating composition comprising a radiation-curable urethane (meth)acrylate according to any one of the above claims.

10. Use of a coating composition according to claim 9 as an interior wood-coating material.

## Revendications

1. (Méth) acrylates d'uréthanne pouvant être durcis par un rayonnement, pouvant être obtenus par les étapes de réaction comprenant :
a) réaction partielle d'un polyol alcoxylé (A) avec de l'acide (méth)acrylique (B) en présence d'au moins un catalyseur d'estérification (C) et d'au moins un inhibiteur de polymérisation (D) ainsi qu'éventuellement un solvant (E) formant un azéotrope avec l'eau,
b) élimination éventuelle, à partir du mélange réactionnel, d'au moins une partie de l'eau apparue en a), b) pouvant avoir lieu pendant et/ou après a),
f) neutralisation éventuelle du mélange réactionnel,
h) dans le cas où un solvant (E) est utilisé, élimination éventuelle de ce solvant par distillation et/ou
i) stripage éventuel avec un gaz inerte dans les conditions de réaction et élimination éventuelle de l'acide acrylique excédentaire par distillation,
k) réaction du mélange réactionnel obtenu après la dernière des étapes de réaction précédentes avec un composé (G) présentant au moins deux groupes époxy, éventuellement en présence d'un catalyseur (H) et
l) réaction du mélange réactionnel issu de k) avec au moins un polyisocyanate (J) et au moins un (méth)acrylate d'hydroxyalkyle (K) et éventuellement au moins un autre composé (M) contenant un ou plusieurs groupes réactifs vis-à-vis de l'isocyanate, éventuellement en présence d'un catalyseur (L).

2. Procédé de préparation de (méth)acrylates d'uréthanne pouvant être durcis par un rayonnement, pouvant être obtenus par les étapes de réaction comprenant:
a) réaction partielle d'un polyol alcoxylé (A) avec de l'acide (méth)acrylique (B) en présence d'au moins un catalyseur d'estérification (C) et d'au moins un inhibiteur de polymérisation (D) ainsi qu'éventuellement un solvant (E) formant un azéotrope avec l'eau,
b) élimination éventuelle, à partir du mélange réactionnel, d'au moins une partie de l'eau apparue en a), b) pouvant avoir lieu pendant et/ou après a),
f) neutralisation éventuelle du mélange réactionnel,
h) dans le cas où un solvant (E) est utilisé, élimination éventuelle de ce solvant par distillation et/ou
i) stripage éventuel avec un gaz inerte dans les conditions de réaction et élimination éventuelle de l'acide acrylique excédentaire par distillation,
k) réaction du mélange réactionnel obtenu après la dernière des étapes de réaction précédentes avec un composé (G) présentant au moins deux groupes époxy, éventuellement en présence d'un catalyseur (H) et
l) réaction du mélange réactionnel issu de k) avec au moins un polyisocyanate (J) et au moins un (méth)acrylate d'hydroxyalkyle (K) et éventuellement au moins un autre composé (M) contenant un ou plusieurs groupes réactifs vis-à-vis de l'isocyanate, éventuellement en présence d'un catalyseur (L).

3. (Méth)acrylates d'uréthanne pouvant être durcis par un rayonnement et procédé selon l'une quelconque des revendications précédentes, **caractérisés en ce que** le mélange réactionnel utilisé dans k) présente un indice d'acide selon la norme DIN EN 3682 allant jusqu' à 200 mg de KOH/g et un indice OH selon la norme DIN 53240 allant jusqu'à 120 mg de KOH/g.

4. (Méth)acrylates d'uréthanne pouvant être durcis par un rayonnement et procédé selon l'une quelconque des revendications précédentes, **caractérisés en ce que** le mélange réactionnel utilisé dans 1) présente un indice OH selon la norme DIN 53240 allant jusqu'à 250 mg de KOH/g.

5. (Méth)acrylates d'uréthanne pouvant être durcis par un rayonnement et procédé selon l'une quelconque des revendications précédentes, **caractérisés en ce que** le polyol (A) est un triméthylolpropane, un triméthyloléthane ou une pentaérythrite éthoxylée une à 20 fois.

6. (Méth)acrylates d'uréthanne pouvant être durcis par un rayonnement et procédé selon l'une quelconque des revendications précédentes, **caractérisés en ce que** la liaison époxyde (G) est du diglycidyléther de bisphénol A, du diglycidyléther de 1,4-butanediol, du triglycidyléther de triméthylolpropane ou du tétraglycidyléther de pentaérythrite.

7. (Méth)acrylates d'uréthanne pouvant être durcis par un rayonnement et procédé selon l'une quelconque des revendications précédentes, **caractérisés en ce que** le polyisocyanate (J) est du diisocyanate de 2,4-toluylène ou de 2,6 -toluylène et leurs mélanges d'isomères, du diisocyanate d'hexaméthylène, du 1,3-bis(isocyanatométhyl)cyclohexane, du diisocyanate d'isophorone ou du di(isocyanatocyclohexyl)méthane.

8. (Méth)acrylates d'uréthanne pouvant être durcis par un rayonnement et procédé selon l'une quelconque des revendications précédentes, **caractérisés en ce que** le (méth)acrylate d'hydroxyalkyle (K) est de l'acrylate de 2-hydroxyéthyle, ou du méthacrylate de 2-hydroxyéthyle.

9. Matière d'enduction pouvant être durcie par un rayonnement, contenant un (méth)acrylate d'uréthanne pouvant être durci par un rayonnement selon l'une quelconque des revendications précédentes.

10. Utilisation d'une matière d'enduction selon la revendication 9 comme vernis à bois pour intérieur.
